# EUROPEAN PATENT SPECIFICATION

(11) **EP 1 771 397 B1**
(45) Date of publication and mention of the grant of the patent: **26.12.2007**
(21) Application number: 05744761.7
(22) Date of filing: 09.06.2005
(51) Int. Cl.: C04B 26/14, C08G 59/50

(54) **MIXTURE FOR APPLYING A COATING**
MISCHUNG ZUM AUFBRINGEN EINER BESCHICHTUNG
MELANGE PERMETTANT D'APPLIQUER UN REVETEMENT

(30) Priority: 18.06.2004 IT MO20040155
(43) Date of publication of application: 11.04.2007
(73) Proprietor: Litokol S.R.L., 42048 Rubiera (IT)
(72) Inventor: CAVALLINI, Alessandro, I-41010 Marzaglia (IT)
(74) Representative: Negrini, Elena
(86) International application number: PCT/IB2005/001650
(87) International publication number: WO 2005/123622

(56) References cited:
- WO-A-93/21125
- SAVIN A A: "USE OF EPOXY MASTIC COMPOSITIONS FOR THE LAYING OF SOLID FLOOR COVERINGS" INTERNATIONAL POLYMER SCIENCE AND TECHNOLOGY, RUBBER & PLASTICS RESEARCH ASSOCIATION, SHREWSBURY, GB, vol. 23, no. 1, January 1996 (1996-01), pages T-59, XP000594855 ISSN: 0307-174X

## Description

### TECHNICAL FIELD

The present invention belong to the field of the building industry and refers to a mixture for applying a coating, such as for tiles, tesseras or plates, made of ceramic, glass or similar, stony plates and natural or artificial conglomerates, especially fit for vertical, horizontal, inclined, plain or curved assembly surfaces in domestic, industrial, or commercial environments, in every environmental condition, for example outside, in bathrooms, in swimming pools and similar.

### BACKGROUND ART

The known products used for laying and sealing ceramic tiles concern different kinds of mixtures such as, for example:
- cementitious adhesives, dispersed and reactive;
- cement and epoxy sealant.

In general, the adhesives known for setting tiles, tesseras and similar, have the disadvantage of being inappropriate for stucco work.

Another disadvantage of some of said assembly adhesives is the fact that, after the setting on vertical or inclined surfaces, they can drip before tiles application.

A further disadvantage of some of said assembly adhesives is the fact that, at least in some conditions, they don't assure a firm setting of the tiles on vertical or inclined surfaces, allowing small shift towards the bottom of the tiles before the hardening of the adhesive.

As far as it concerns the sealants used for filling the joints between ceramic tiles, the known industrial technique consists in the dispersion in the mass of the binder, inert charges and additives, of some fine powdered coloured pigments, characterized by an inorganic nature (for example iron oxides) and/or organic nature (for example phthalocyanines). The finished mixture deriving from this processing is applied in the joints between ceramic tiles with a suitable equipment and later cleaned by sponges or by felts soaked in water. Just for the content of coloured pigments dispersed in the mass, cleaning can meet some difficulties, because coloured halos remain on the surface of tiles. This problem is more evident on some kind of tile having, for example, a rough (non skid) or porous (smooth-glazed stoneware) surface. In these cases it is sometimes necessary to repeat cleaning until the complete removal of the sealant residues. Repeated cleaning actions can however deteriorate the stucco surface, reducing its level in comparison to ceramic components. If the operation of stucco work concerns a ceramic material such as, for example, smooth-glazed stoneware, characterized by a superficial microporosity, the risk for superficial damages of the ceramic surface exists, as the powered coloured pigments can deposit in this microporosity permanently, altering its chromatic aspect. This risk is as much high as the colour of the sealant is intense.

In the case of cement sealants there is also another problem, connected to the formation of "efflorescences" on the surface of the hardened sealant, which modifies its colour. This phenomenon should be ascribed to calcium oxide (CaO), present in Portland cements, which, combining with the water in the mixture, forms calcium hydroxide (Ca(OH)₂). Subsequently, calcium hydroxide, reacting with the carbonic anhydride (CO₂) present in the atmosphere, produces calcium carbonate (CaCO₃), which, being characterized by a whitish colour, changes the original colour of the sealant.

A further disadvantage of these known stuccos lies in that, in general, they are not suitable for the tiles setting, especially on vertical surfaces.

Another disadvantage of some known stuccos lies in that they are not adequately resistant to adverse environmental conditions, in that they can be water permeable and in that they can soften or melt in water.

Document WO 9321125 A discloses a grout composition for applying a coating to the joints of ceramic tiles. The composition comprises a curable epoxy resin a hardener for the curable epoxy and a filler. Said document includes the use of an bisphenol A resin, of a aliphatic amine, of fumed silica as thixotropic agent, pigments, hydrophobic substances.

Document A.A. Savin, International Polymer Science and Technology 23, T/59 (1996) discloses compositions for laying of floor coverings comprising an epoxy resin, polyethylene polyamine hardener, plasticizer, ground quartz filler, acetone as diluent and a dye.

### DISCLOSURE OF THE INVENTION

The object of the present invention is to propose a mixture for fixing coatings made of tiles, tesseras, plates or similar, to a wall, floor or a general support and which can be used like stucco for joints or for slots between tiles.

Another object is to propose a mixture almost exempt from dripping and which can fix the coating also in vertical applications.

A further object is to propose a mixture easily removable, for the cleaning of the visible side of tiles, or similar, which don't leave halos, don't alter the colour of the coating and don't cause damages to the stuccos of the joints.

Another object is to propose a mixture which don't show "efflorescences", which are whitish concretions on the surface of hardened stuccos.

A further object is to propose a mixture able to fix and to stucco coatings in a permanent manner, resistant even to water and durable even in adverse environmental conditions inside and outside.

### BRIEF DESCRIPTION OF THE INVENTION

The mixture, object of the present invention, is obtained from an innovative formulative/productive technique which user quartziferous or calcareous coloured grains, having different granulometry, as inert charges. This solution prevents the solubilization of the colour in the epoxy binder in which it is mixed. By this way, therefore, the mass colouration of the mixture is eliminated. This results, therefore, in a mixture which does not leave halos on the ceramic surface, facilitating operations of setting. Moreover, the colours obtainable with this productive technique are much more brighter than the mat traditional colours, typical of cement and epoxy sealants, which are coloured inside the mass. Being the mixture composed by a binder based on epoxy resin, problems connected to the formation of surface "efflorescences" are eliminated. This results, therefore, in sealings characterized by uniform and constant colours.

The binder can be composed by epoxy resins based on bisphenol A and epichlorhydrin with reactive or not reactive diluent, or based on bisphenol F and epichlorhydrin, or on a mixture of these two. In particular, the epoxy resins based on bisphenol F show some slight improvements of the properties of chemical physic and mechanic resistance, with respect to epoxy resins based on bisphenol A. It can be also used a hydrogenated epoxy resin based on bisphenol A and epichlorhydrin, characterized by a special resistance to the yellowing when subjected to the action of sunlight. In order to confer to the product mixed with its catalyser a special rheology with "thixotropic" character, which makes possible the application also on vertical surfaces without risk of dripping in the case of joints wide up to 10 mm if used as sealant, and without let slip the tiles if used as adhesive, it is included in the mixture a special rheological additive with an organic nature. In particular, this is hydrogenated castor oil, in form of thin powder which is dispersed under strong stirring during the mixing together with the binder (epoxy resin) and with the inert coloured charges. In order to activate the rheological additive, it is essential to rise the temperature during mixing up to 37 °C - 45 °C. Another kind of thixotropant rheological additive can be used in partial or total replacement of the hydrogenated castor oil, either powdered or liquid, such as, for example:
- micronized amorphous silica or pyrogenic silica;
- solution of poly-hydroxy-carboxylated amide;
- solution of modified urea;
- bentonite;
- polyethylene fibres having an average length from 100 to 400 micron.

In order to improve the hydrophobic character of the mixture and the wettability of the system, a special plasticizer/wetting agent, consisting in a not reactive diluent, comprising isomers of di-isopropyl-naphthalene (C₁₆H₂₀) is included. The additive is not included in the polymeric structure of the molecular system during the hardening, and it maintains its monomolecular structure, differently from the reactive diluents, which produces interruptions in the epoxy network. This additive not only prevents the formation of the three-dimensional network; the holes and the empty spaces left free during the hardening are occupied by a hydrophobic media, which also resists to the electrolytic attacks, strengthening in this way the barrier function of the resin.

Moreover, it favours the mobility of the molecules of the resin and of the hardening agent, particularly at the beginning of the hardening, allowing the reactive groups to react more quickly between them.

The inert charges can be provided by quartziferous or calcareous spherical grains, having granulometries ranging from 0.06/0.25 mm up to 0.7/1.2 mm and superficially coated by a film of epoxy or polyurethane paint.

The productive technique of these coloured inerts, requires the mixing inside the mass of the natural inerts with special epoxy or polyurethane paints. During mixing, the temperature is increased up to around +70 °C in order to accelerate paint drying on the external surface of the grains.

In order to get sealings with special aesthetical effects, different combinations which, however, don't modify the properties above described of the mixture, can be realized, such as for example:
- mixing of inerts coated with different colours in order to get sealants with a "marbled" effect;
- realization of a basic mixture with natural not coloured inerts, to which a third component, based on pigments which have the characteristic to change in colour in function of the angle of incidence of the light, can be added.

Pigments with different chemical structures in order to get different effects can be used, such as, for example:
- pigments consisting in iron oxide foils externally coated by a film of silica and iron oxide, which allow colour changing from purple to gold;
- pigments consisting in aluminium foils externally coated by a film of silica and iron oxide, which allow colour changing from green-gold to red-grey and from red to gold.

In order to confer to the epoxy system a higher resistance to the light, some special additive which confer stability towards the light at the liquid form (UV adsorber), consisting in mixtures of bis(1,2,2,6,6-pentamethyl-4-piperidyl)sebacate + methyl(1,2,2,6,6-pentamethyl-4-piperidyl)sebacate associated to a mixture 3-[3-(2H-benzotriazol-2-yl)-5-(1,1-dimethylethyl)-4-hydroxyphenyl]propionate of C7-C9 branched and linear alkyls, can be used.

The second component of the mixture is the hardener or catalyst. This component has the task to react with the epoxy resin enclosed in the first component and to polymerise it. The hardener can be composed by a mixture of cycloaliphatic amines (polyamide with at least one amino group bound directly to a saturated ring, modified in different ways in order to allow the hardening at room temperature) and amidoamine (products of the reaction of the aliphatic amines with fat acids of tall oil, containing amidic, aminic and imidazolinic groups). These two kind of amines differ for a series of final characteristics, as for example:
- time of gelification;
- film flexibility;
- adhesion to different substrates;
- chemical resistance towards acids or solvents.

In particular, amidoamines are emulsifiable in water, while cycloaliphatic amines are emulsifiable in ethylic alcohol. The percentage of use of the two amines in the mixture depends on the final characteristics which are to be conferred to the mixture. Whatever is the composition of the mixture, it must to be calculated the corresponding "equivalent weight for active hydrogen" in order to calculate the stoichiometric dose on the first component which contains the epoxy resin. The stoichiometric ratio is based on the ratio between the equivalent weight for active hydrogen of the catalyst and the epoxy equivalent weight of the resin used.

In the following table are reported, as an example, four possible basic compositions, from I to IV, of the mixture.

**TYPICAL COMPOSITIONS OF THE NEW MIXTURE**

| **EPOXY BINDER (COMPONENT A), RHEOLOGICAL PRODUCT AND ADDITIVES** | **COMPOSITIONS*** | | | |
|---|---|---|---|---|
| | **I** | **II** | **III** | **IV** |
| Epoxy resin bisphenol A | 5-25 | 5-15 | 0-5 | - |
| Epoxy resin bisphenol F | - | 5-15 | 10-20 | - |
| Hydrogenated epoxy resin bisphenol A | | | | 5-25 |
| Rheological additive based on hydrogenated castor oil | 0.5-2 | 0.5-2 | 0.5-2 | 0.5-2 |
| Secondary rheological additives | 0.1-1 | 0.1-1 | 0.1-1 | 0.1-1 |
| Plasticizer/wetting agent | 1-4 | 1-4 | 1-4 | 1-4 |
| Coloured pre-coated quartz/carbonates 0.06/0.25 | 68-93.5 | 68-935 | 68-93.5 | 68-93.5 |
| UV Adsorber | 0.025-0.5 | 0.025-0.5 | 0.025-0.5 | 0.025-0.5 |

| **HARDENER (COMPONENT B)** | **COMPOSITIONS**** | | | |
|---|---|---|---|---|
| | **I** | **II** | **III** | **IV** |
| Cycloaliphatic amine | 50 | 75 | 25 | 100 |
| Amidoamine | 50 | 25 | 75 | - |

| **SOLID PRODUCT IN PARTICLES (COMPONENT C)** | **COMPOSITIONS***** | | | |
|---|---|---|---|---|
| | **I** | **11** | **III** | **IV** |
| Lamellar pigments | 1-20 | 1-20 | 1-20 | 1-20 |
| Phosphorescent pigments | 1-10 | 1-10 | 1-10 | 1-10 |
| Glitter | 1-15 | 1-15 | 1-15 | 1-15 |

| | | | | |
|---|---|---|---|---|
| * percentages ** The amount of part B with respect to part A depends on the ratio between the equivalent weight of the active hydrogen of the mixture of hardeners and the epoxy equivalent weight of the epoxy resin. *** parts by weight per 100 parts of PART A. | | | | |

Referring to the epoxy nature of the mixture, the final mechanical characteristics are those typical of this kind of materials and in particular:
- high mechanical resistance to bending and compression;
- high resistance to abrasion;
- very high chemical resistance;
- almost absent absorption;
- low shrinkage.

The mixture comply with the European rules EN 12004 "Adhesive for tiles" and EN 13888 "Sealant for tiles". In particular, based on the classifications provided by rules, the mixture is identified as:
R2T, improved reactive adhesive, for ceramic tiles, which does not cause vertical sliding;
RG, reactive sealant for joints between ceramic tiles.

### BEST MODE OF CARRYING OUT THE INVENTION

The mixture for apply a coating object of the present invention includes at least one epoxy binder and a corresponding hardener in predetermined proportions, and includes moreover at least one solid product present in particles, having size larger than a predetermined minimum value, for example corresponding to the dimensions of porosity and recesses of the material of the coating, and fit to confer predetermined physical characteristics to the mixture. The mixture includes moreover a rheological product fit to facilitate the application of the coating using the same mixture at the fluid state.

The epoxy binder may include epoxy resins based on bisphenol A and epichlorhydrin with reactive or not reactive diluent, and/or epoxy resins based on bisphenol F and epichlorhydrin. Those resins are present in the binder singularly or, preferably, mixed in variable percentage according to the characteristics of the hardened mixture.

Alternatively, the invention provides that the epoxy binder includes a hydrogenated epoxy resin based on bisphenol A and epichlorhydrin.

The hardener may include cycloaliphatic amines, consisting in polyamide with at least one amino group bound directly to a saturated ring and modified in different ways in order to allow the hardening at room temperature, and/or includes amidoamines, consisting in products of the reaction of the aliphatic amines with fat acids of tall oil, containing amidic, aminic and imidazolinic groups.

The invention provides that cycloaliphatic amines and amidoamines shall be present in the binder singularly or, preferably, mixed in variable percentage in order to modify the characteristics of the hardened mixture.

The solid fraction in particles may be composed by inert charges in quartziferous, calcareous, stony or similar grains, for example with granulometry ranging from 0.06 mm up to 1.2 mm.

The grains of the solid fraction in particles may be superficially coloured with epoxy, polyurethane or other insoluble in the mixture at the fluid state, paint.

Alternatively, the invention provides that the whole thickness of the solid particles in the mixture shall be coloured and that these particles shall be insoluble in the same mixture at the fluid state.

Optionally, the grains of the solid fraction in particles can be in different colours in different dimensions in order to get sealants with "marbled" or granulated effect.

To get special effects, the solid fraction in particles can include optionally elements based on pigments which have the characteristic to change in colour depending on the angle of incidence of the light.

These elements of the solid fraction in particles based on pigments can include pigments consisting in iron oxide foils externally coated by a film of silica and iron oxide, which allow colour changing from purple to gold or they can include pigments consisting in aluminium foils externally coated by a film of silica and iron oxide, for colour changing from green-gold to red-grey and from red to gold.

A further version provides that the solid fraction in particles shall include elements based on phosphorescent pigments, consisting in aluminised alkaline earths, which are exited by UV rays o white light and emit light, or shall include elements based on differently coloured foils as that known by the name of "GLITTER", consisting in polyethylene terephthalate (PET) or PVC.

In order to increase the resistance of the hardened mixture, the solid fraction can also include fibres for reinforcement, for example in glass.

The rheological product is such as to confer thixotropic attributes to the mixture at the fluid state and comprises, for example, hydrogenated castor oil in form of thin powder dispersed in the binder and, additionally or in alternative, micronized amorphous silica, pyrogenic silica, a solution of poly-hydroxy-carboxylated amide, a solution of modified urea, bentonite and/or fibres.

Those fibres of the rheological product are made by polyethylene and they have an average length from about 100 micron to about 400 micron.

Moreover, the mixture includes a plasticizer/wetting agent product fit to improve the hydrophobic character and the wettability of the mixture.

This plasticizer/wetting agent product includes a not reactive diluent, comprising isomers of di-isopropyl-naphthalene (C₁₆H₂₀).

In order to increase the resistance of the hardened mixture especially to the UV rays, the mixture can be provided with some additives which confer stability towards the light, consisting in mixtures of bis(1,2,2,6,6-pentamethyl-4-piperidyl)sebacate + methyl(1,2,2,6,6-pentamethyl-4-piperidyl)sebacate associated to a mixture of 3-[3-(2H-benzotriazol-2-yl)-5-(1,1-dimethylethyl)-4-hydroxyphenyl]propionate of C7-C9 branched and linear alkyls.

A possible method for the utilization of the mixture comprises the phases which are reported below as an example.

MIXING: pour hardener or catalyst (component B) on the epoxy binder (component A). These components are supposed to be supplied in containers pre-dosed in the right ratio. It is preferable that the mixing will be obtained using a helix drill until to get a homogeneous mixture without lumpy. It is not recommended to perform the mixing manually. Pre-dosing containers of the two components makes impossible to do errors in mixing. The mixture obtained remains workable for around 45 minutes at the temperature of about +23 °C.

It is possible to pour in the mixture the third component C (this pre-dosed also) consisting in the solid product in particles of the kind or of the kinds able to confer to the hardened mixture the expected physical characteristics, such as mechanical resistance, colour and/or chromatic or aesthetical effects.

USE AS ADHESIVE: the mixture can be advantageously used as an adhesive, for example in setting glassy and/or metallic mosaic where, due to low thickness of the material, it is difficult to realize a stucco work of a different colour than the adhesive. The appropriate choice of the colour of the mixture used as an adhesive lets not modify or control the final colour of transparent glassy mosaics or of other transparent coatings.

STUCCO WORK OF THE TILED SURFACE: the obtained mixture can be applied in joints, using a special gummed spatula, performing diagonal movements in comparison to the line of the joints, removing the mixture in excess with the same gummed spatula.

CLEANING AND FINISHING: preferably, cleaning and finishing of the stucco work must be performed when the mixture is fresh, and, however, as soon as possible, taking care of not doing empty the joints. Sprinkling preventively the stuccoed surfaces with clean water results in not leave halos on the surface of the tiles. A first cleaning can be realized with a spatula provided by of a dampened white felt, performing circular movements clockwise and anticlockwise, with the purpose of sealing perfectly the sides of the tiles and removing the excess of sealant from the surface of the tiles. Subsequently, it is possible to perform a second passage with a cellulose rigid sponge in order to get a smooth and blocked surface, removing completely the mixture from the tiles, without emptying the joints and drying the excess of water. A possible remaining of transparent mixture can be removed from the surface also after about 12 hours with a cloth soaked in denatured ethylic alcohol.

An advantage of the present invention is to provide a mixture for applying a coating, suitable for fixing tiles, tesseras, plates or similar, to a wall, floor or a general support and which can be used like stucco for joints or for slots between tiles.

Another advantage is to provide a mixture almost exempt from dripping and which can fix immediately the coating also in vertical applications.

A further advantage is to provide a mixture that, after a simple cleaning which don't cause damages to the stuccos of the joints, don't leave visible traces on the surface of the coating and, in particular, which don't leave halos and alterations of the coating colour.

Another advantage is to furnish a mixture which don't show "efflorescences", which are whitish concretions on the surface of hardened stuccos.

Another advantage is to furnish a mixture able to fix and to stucco coatings in a permanent manner, resistant even to water and durable even in adverse environmental conditions inside and outside.

## Claims

1. A mixture for applying a coating and including at least one epoxy binder and a corresponding hardener in predetermined proportions, said mixture includes at least one solid product in particles, having size larger than a predetermined minimum value, and fit to confer determined physical characteristics to the mixture, and a rheological product fit to facilitate the application of the coating using the same mixture at the fluid state; said mixture being **characterized in that** includes a plasticizer/wetting agent product fit to improve the hydrophobic character and the wettability of the mixture; said plasticizer/wetting agent product including a not reactive diluent, comprising isomers of di-isopropyl-naphthalene (C16H20).

2. A mixture according to claim 1 **characterized in that** the solid fraction in particles is composed by inert charges in quartziferous, calcareous, stony or similar grains with granulometry ranging from 0.06 mm up to 1.2 mm.

3. A mixture according to claim 2 **characterized in that** the grains of the solid fraction in particles are superficially coloured with epoxy, polyurethane or other paint insoluble in the mixture.

4. A mixture according to claim 2 **characterized in that** the solid fraction in particles is coloured and is insoluble in the mixture.

5. A mixture according to claim 2 **characterized in that** the grains of the solid fraction in particles are of different colours in order to get sealants with "marbled" effect.

6. A mixture according to claim 2 **characterized in that** the solid fraction in particles includes elements based on pigments which have the characteristic to change in colour depending on the angle of incidence of the light.

7. A mixture according to claim 6 **characterized in that** the elements based on pigments of the solid fraction in particles include pigments consisting in iron oxide foils externally coated by a film of silica and iron oxide which allow colour changing from purple to gold.

8. A mixture according to claim 6 **characterized in that** the elements based on pigments of the solid fraction in particles include pigments consisting in aluminium foils externally coated by a film of silica and iron oxide which allow colour changing from green-gold to red-grey and from red to gold.

9. A mixture according to claim 2 **characterized in that** the solid fraction in particles includes elements based on phosphorescent pigments, consisting in aluminised alkaline earths, which are exited by UV rays o white light and emit light.

10. A mixture according to claim 2 **characterized in that** the solid fraction in particles includes elements based on differently coloured foils consisting in polyethylene terephthalate (PET) or PVC.

11. A mixture according to claim 1 **characterized in that** the solid fraction in particles includes fibres fit at least to increase the resistance of the hardened mixture.

12. A mixture according to claim 1 **characterized in that** the rheological product confers thixotropic characteristics to the mixture at the fluid state.

13. A mixture according to claim 12 **characterized in that** the rheological product comprises hydrogenated castor oil.

14. A mixture according to claim 13 **characterized in that** the hydrogenated castor oil is in form of very thin powder dispersed in the binder by strong stirring.

15. A mixture according to claim 12 **characterized in that** the rheological product comprises micronized amorphous silica or pyrogenic silica.

16. A mixture according to claim 12 **characterized in that** the rheological product comprises a solution of poly-hydroxy-carboxylated amide.

17. A mixture according to claim 12 **characterized in that** the rheological product comprises a solution of modified urea.

18. A mixture according to claim 12 **characterized in that** the rheological product comprises bentonite.

19. A mixture according to claim 12 **characterized in that** the rheological product comprises fibres.

20. A mixture according to claim 19 **characterized in that** the fibres of the rheological product are made by polyethylene and they have an average length ranging from about 100 micron to about 400 micron.

21. A mixture according to claim 1 **characterized in that** includes additives which confer stability towards the light fit to increase the resistance of the hardened mixture especially to the UV rays.

22. A mixture according to claim 21 **characterized in that** the stabilizing additives consist in mixtures of bis(1,2,2,6,6-pentamethyl-4-piperidyl)sebacate + methyl(1,2,2,6,6-pentamethyl-4-piperidyl)sebacate associated to a mixture of 3-[3-(2H-benzotriazol-2-yl)-5-(1,1-dimethylethyl)-4-hydroxyphenyl] propionate of C7-C9 branched and linear alkyls.

23. A mixture according to claim 1 **characterized in that** the epoxy binder includes epoxy resins based on bisphenol A and epichlorhydrin with reactive or not reactive diluent.

24. A mixture according to claim 1 **characterized in that** the epoxy binder includes epoxy resins based on bisphenol F and epichlorhydrin.

25. A mixture according to claim 1 **characterized in that** the epoxy binder includes a mixture of epoxy resins based on bisphenol A and epichlorhydrin and based on bisphenol F and epichlorhydrin.

26. A mixture according to claim 1 **characterized in that** the epoxy binder includes at least a hydrogenated epoxy resin based on bisphenol A and epichlorhydrin.

27. A mixture according to claim 1 **characterized in that** the hardener includes cycloaliphatic amines.

28. A mixture according to claim 27 **characterized in that** the cycloaliphatic amines consist in polyamide with at least one amino group bound directly to a saturated ring and modified in different ways in order to allow the hardening at room temperature.

29. A mixture according to claim 1 **characterized in that** the hardener includes amidoamine.

30. A mixture according to claim 29 **characterized in that** the amidoamines consist in products of the reaction of the aliphatic amines with fat acids of tall oil containing amidic, aminic and imidazolinic groups.

31. A mixture according to claim 1 **characterized in that** the hardener comprises a mixture of cycloaliphatic amines and amidoamines.

## Patentansprüche

1. Gemisch zum Aufbringen einer Beschichtung und mit mindestens einem Epoxidbinder und einem entsprechenden Härter in vorgegebenen Anteilen, wobei das Gemisch mindestens ein aus Teilchen bestehendes festes Produkt mit einer Größe, die größer als ein vorgegebener Minimalwert ist und der Mischung vorgegebene physikalische Eigenschaften verleihen kann, und ein rheologisches Produkt enthält, welches das Aufbringen der Beschichtung unter Verwendung des genannten Gemischs in fluidem Zustand erleichtern kann; wobei das Gemisch **dadurch gekennzeichnet ist, dass** es ein Produkt aus Weichmacher/Netzmittel enthält, welches den hydrophoben Charakter und die Benetzbarkeit des Gemischs verbessern kann; wobei das Produkt aus Weichmacher/Netzmittel ein nicht reaktionsfähiges Verdünnungsmittel enthält, das Isomere von Diisopropylnaphthalen (C₁₆H₂₀) umfasst.

2. Gemisch nach Anspruch 1, **dadurch gekennzeichnet, dass** der aus Teilchen bestehende, feste Anteil aus inerten Füllmengen mit quarzartigen, kalkartigen, steinartigen oder ähnlichen Körnchen mit Körnchengrößen im Bereich von 0,06mm bis zu 1,2mm besteht.

3. Gemisch nach Anspruch 2, **dadurch gekennzeichnet, dass** die Körnchen des aus Teilchen bestehenden, festen Anteils auf der Oberfläche mit Epoxid, Polyurethan oder einer anderen in dem Gemisch unlöslichen Farbmasse gefärbt sind.

4. Gemisch nach Anspruch 2, **dadurch gekennzeichnet, dass** der aus Teilchen bestehende, feste Anteil gefärbt und in der Mischung unlöslich ist.

5. Gemisch nach Anspruch 2, **dadurch gekennzeichnet, dass** die Körnchen des aus Teilchen bestehenden, festen Anteils unterschiedliche Farben aufweisen, damit man Dichtmittel mit "Marmor"-Effekt erhält.

6. Gemisch nach Anspruch 2, **dadurch gekennzeichnet, dass** der aus Teilchen bestehende, feste Anteil Elemente auf der Basis von Pigmenten umfasst, die abhängig von dem Einfallswinkel des Lichts die Eigenschaft zum Wechseln der Farbe besitzen.

7. Gemisch nach Anspruch 6, **dadurch gekennzeichnet, dass** die Elemente auf der Basis von Pigmenten in dem aus Teilchen bestehenden, festen Anteil Pigmente umfassen, die aus äußerlich mit einem Film aus Siliciumdioxid und Eisenoxid beschichteten Eisenoxidfolien bestehen, die einen Farbwechsel von purpurfarben zu golden ermöglichen.

8. Gemisch nach Anspruch 6, **dadurch gekennzeichnet, dass** die Elemente auf der Basis von Pigmenten in dem aus Teilchen bestehenden, festen Anteil Pigmente umfassen, die aus äußerlich mit einem Film aus Siliciumdioxid und Eisenoxid beschichteten Aluminiumfolien bestehen, die einen Farbwechsel von grüngolden zu rot-grau und von rot zu golden ermöglichen.

9. Gemisch nach Anspruch 2, **dadurch gekennzeichnet, dass** der aus Teilchen bestehende, feste Anteil Elemente auf der Basis von phosphoreszierenden Pigmenten umfasst, die aus aluminisierten Erdalkalimetallen bestehen, die von UV-Strahlen oder weißem Licht erregt werden und Licht aussenden.

10. Gemisch nach Anspruch 2, **dadurch gekennzeichnet, dass** der aus Teilchen bestehende, feste Anteil Elemente auf der Basis unterschiedlich gefärbter Folien umfasst, die aus Polyethylenterephthalat (PET) oder PVC bestehen.

11. Gemisch nach Anspruch 1, **dadurch gekennzeichnet, dass** der aus Teilchen bestehende, feste Anteil Fasern umfasst, welche die Beständigkeit des gehärteten Gemischs zumindest erhöhen können.

12. Gemisch nach Anspruch 1, **dadurch gekennzeichnet, dass** das rheologische Produkt dem Gemisch im fluiden Zustand thixotrope Eigenschaften verleiht.

13. Gemisch nach Anspruch 12, **dadurch gekennzeichnet, dass** das rheologische Produkt gehärtetes Ricinusöl umfasst.

14. Gemisch nach Anspruch 13, **dadurch gekennzeichnet, dass** das gehärtete Rici-nusöl die Form von sehr dünnem Pulver aufweist, das durch starkes Umrühren in dem Binder verteilt wird.

15. Gemisch nach Anspruch 12, **dadurch gekennzeichnet, dass** das rheologische Produkt mikronisiertes amorphes Siliciumdioxid oder pyrogenes Siliciumdioxid umfasst.

16. Gemisch nach Anspruch 12, **dadurch gekennzeichnet, dass** das rheologische Produkt eine Lösung von Polyhydroxycarboxylamid umfasst.

17. Gemisch nach Anspruch 12, **dadurch gekennzeichnet, dass** das rheologische Produkt eine Lösung von modifiziertem Harnstoff umfasst.

18. Gemisch nach Anspruch 12, **dadurch gekennzeichnet, dass** das rheologische Produkt Bentonit umfasst.

19. Gemisch nach Anspruch 12, **dadurch gekennzeichnet, dass** das rheologische Produkt Fasern umfasst.

20. Gemisch nach Anspruch 19, **dadurch gekennzeichnet, dass** die Fasern des rheologischen Produkts aus Polyethylen hergestellt sind und diese eine durchschnittliche Länge im Bereich von etwa 100 Mikrometern bis etwa 400 Mikrometer aufweisen.

21. Gemisch nach Anspruch 1, **dadurch gekennzeichnet, dass** es Zusatzstoffe umfasst, die ihm Lichtstabilität verleihen, durch welche die Beständigkeit des gehärteten Gemischs gegen UV-Licht erhöht werden kann.

22. Gemisch nach Anspruch 21, **dadurch gekennzeichnet, dass** die stabilisierenden Zusatzstoffe aus Mischungen von Bis(1,2,2,6,6-pentamethyl-4-piperidyl)sebacat + Methyl(1,2,2,6,6-pentamethyl-4-piperidyl)sebacat bestehen, die mit einer Mischung von 3-[3-(2H-benzotriazol-2-yl)-5-(1,1-dimethylethyl)-4-hydroxyphe-nyl]propionat von verzweigten C₇-C₉- und linearen Alkylen assoziiert sind.

23. Gemisch nach Anspruch 1, **dadurch gekennzeichnet, dass** der Epoxidbinder Epoxidharze auf der Basis von Bisphenol A und Epichlorhydrin mit reaktionsfähigem oder nicht reaktionsfähigem Verdünnungsmittel umfasst.

24. Gemisch nach Anspruch 1, **dadurch gekennzeichnet, dass** der Epoxidbinder Epoxidharze auf der Basis von Bisphenol F und Epichlorhydrin umfasst.

25. Gemisch nach Anspruch 1, **dadurch gekennzeichnet, dass** der Epoxidbinder eine Mischung von Epoxidharzen auf der Basis von Bisphenol A und Epichlorhydrin und auf der Basis von Bisphenol F und Epichlorhydrin umfasst.

26. Gemisch nach Anspruch 1, **dadurch gekennzeichnet, dass** der Epoxidbinder wenigstens ein gehärtetes Epoxidharz auf der Basis von Bisphenol A und Epi-chlorhydrin umfasst.

27. Gemisch nach Anspruch 1, **dadurch gekennzeichnet, dass** der Härter cycloaliphatische Amine umfasst.

28. Gemisch nach Anspruch 27, **dadurch gekennzeichnet, dass** die cycloaliphatischen Amine aus Polyamid mit mindestens einer Aminogruppe bestehen, die direkt an einen gesättigten Ring gebunden und in verschiedener Weise modifiziert ist, um das Härten bei Zimmertemperatur zu ermöglichen.

29. Gemisch nach Anspruch 1, **dadurch gekennzeichnet, dass** der Härter Amidoamin umfasst.

30. Gemisch nach Anspruch 29, **dadurch gekennzeichnet, dass** die Amidoamine aus Produkten der Reaktion der aliphatischen Amine mit Fettsäuren von Tallöl bestehen, die Amid-, Amin- und Imidazolingruppen enthalten.

31. Gemisch nach Anspruch 1, **dadurch gekennzeichnet, dass** der Härter eine Mischung von cycloaliphatischen Aminen und Amidoaminen umfasst.

## Revendications

1. Mélange pour application d'un revêtement et comportant au moins un liant époxy et un durcisseur correspondant en des proportions prédéterminées, ledit mélange comportant au moins un produit solide sous forme de particules, ayant une taille supérieure à une valeur minimale prédéterminée, et adaptées pour conférer des caractéristiques physiques déterminées au mélange, et un produit rhéologique adapté pour faciliter l'application du revêtement en utilisant le même mélange à l'état fluide ; ledit mélange étant **caractérisé en ce qu'**il comporte un produit ayant une fonction de plastifiant/agent mouillant adapté pour améliorer le caractère hydrophobe et la mouillabilité du mélange ; ledit produit ayant une fonction de plastifiant/agent mouillant comportant un diluant non réactif, qui comprend des isomères de di-isopropyl-naphtalène (C16H20).

2. Mélange selon la revendication 1 **caractérisé en ce que** la fraction solide sous forme de particules est composée de charges inertes sous forme de grains quartzeux, calcaires, pierreux ou analogues ayant une granulométrie allant de 0,06 mm à 1,2 mm.

3. Mélange selon la revendication 2 **caractérisé en ce que** les grains de la fraction solide sous forme de particules sont superficiellement colorés avec une peinture époxy, de polyuréthane ou une autre peinture insoluble dans le mélange.

4. Mélange selon la revendication 2 **caractérisé en ce que** la fraction solide sous forme de particules est colorée et est insoluble dans le mélange.

5. Mélange selon la revendication 2 **caractérisé en ce que** les grains de la fraction solide sous forme de particules sont de différentes couleurs afin d'obtenir des matériaux d'étanchéité avec un effet "marbré".

6. Mélange selon la revendication 2 **caractérisé en ce que** la fraction solide sous forme de particules comporte des éléments à base de pigments qui ont la caractéristique de changer de couleur selon l'angle d'incidence de la lumière.

7. Mélange selon la revendication 6 **caractérisé en ce que** les éléments à base de pigments de la fraction solide sous forme de particules comportent des pigments consistant en des feuilles d'oxyde de fer revêtues extérieurement d'un film de silice et d'oxyde de fer qui permettent un changement de la couleur pourpre à la couleur or.

8. Mélange selon la revendication 6 **caractérisé en ce que** les éléments à base de pigments de la fraction solide sous forme de particules comportent des pigments consistant en des feuilles d'oxyde de fer revêtues extérieurement d'un film de silice et d'oxyde de fer qui permettent un changement de la couleur vert-or à la couleur rouge-gris et de la couleur rouge à la couleur or.

9. Mélange selon la revendication 2 **caractérisé en ce que** la fraction solide sous forme de particules comporte des éléments à base de pigments phosphorescents, consistant en des métaux alcalino-terreux aluminisés, qui sont excités par le rayonnement UV ou la lumière blanche et émettent de la lumière.

10. Mélange selon la revendication 2 **caractérisé en ce que** la fraction solide sous forme de particules comporte des éléments à base de feuilles différemment colorées consistant en du téréphtalate de polyéthylène (PET) ou du PVC.

11. Mélange selon la revendication 1 **caractérisé en ce que** la fraction solide sous forme de particules comporte des fibres adaptées au moins pour augmenter la résistance du mélange durci.

12. Mélange selon la revendication 1 **caractérisé en ce que** le produit rhéologique confère des caractéristiques thixotropiques au mélange à l'état liquide.

13. Mélange selon la revendication 12 **caractérisé en ce que** le produit rhéologique comprend de l'huile de ricin hydrogénée.

14. Mélange selon la revendication 13 **caractérisé en ce que** l'huile de ricin hydrogénée est sous forme de poudre très fine dispersée dans le liant par agitation vigoureuse.

15. Mélange selon la revendication 12 **caractérisé en ce que** le produit rhéologique comprend de la silice amorphe micronisée ou de la silice pyrogénée.

16. Mélange selon la revendication 12 **caractérisé en ce que** le produit rhéologique comprend une solution d'amide poly-hydroxy-carboxylée.

17. Mélange selon la revendication 12 **caractérisé en ce que** le produit rhéologique comprend une solution d'urée modifiée.

18. Mélange selon la revendication 12 **caractérisé en ce que** le produit rhéologique comprend de la bentonite.

19. Mélange selon la revendication 12 **caractérisé en ce que** le produit rhéologique comprend des fibres.

20. Mélange selon la revendication 19 **caractérisé en ce que** les fibres du produit rhéologique sont constituées de polyéthylène et **en ce qu'**elles ont une longueur moyenne allant d'environ 100 microns à environ 400 microns.

21. Mélange selon la revendication 1 **caractérisé en ce qu'**il comporte des additifs qui confèrent une stabilité vis-à-vis de la lumière, adaptés pour augmenter la résistance du mélange durci particulièrement au rayonnement UV.

22. Mélange selon la revendication 21 **caractérisé en ce que** les additifs stabilisants consistent en des mélanges de bis(1,2,2,6,6-pentaméthyl-4-pipéridyl)sébacate et de méthyl(1,2,2,6,6-pentaméthyl-4-pipéridyl)sébacate associés à un mélange de 3-[3-(2H-benzotriazol-2-yl)-5-(1,1-diméthyléthyl)-4-hydroxyphényl]propionate d'alkyles en C7 à C9 ramifiés et linéaires.

23. Mélange selon la revendication 1 **caractérisé en ce que** le liant époxy comporte des résines époxy à base de bisphénol A et d'épichlorhydrine avec un diluant réactif ou non réactif.

24. Mélange selon la revendication 1 **caractérisé en ce que** le liant époxy comporte des résines époxy à base de bisphénol F et d'épichlorhydrine.

25. Mélange selon la revendication 1 **caractérisé en ce que** le liant époxy comporte un mélange de résines époxy à base de bisphénol A et d'épichlorhydrine et de résines à base de bisphénol F et d'épichlorhydrine.

26. Mélange selon la revendication 1 **caractérisé en ce que** le liant époxy comporte au moins une résine époxy hydrogénée à base de bisphénol A et d'épichlorhydrine.

27. Mélange selon la revendication 1 **caractérisé en ce que** le durcisseur comporte des amines cycloaliphatiques.

28. Mélange selon la revendication 27 **caractérisé en ce que** les amines cycloaliphatiques consistent en du polyamide avec au moins un groupe amino lié directement à un cycle saturé et modifié de différentes façons afin de permettre le durcissement à température ambiante.

29. Mélange selon la revendication 1 **caractérisé en ce que** le durcisseur comporte de l'amidoamine.

30. Mélange selon la revendication 29 **caractérisé en ce que** les amidoamines consistent en les produits de la réaction entre les amines aliphatiques avec des acides gras d'huile de tall contenant des groupes amidiques, aminiques et imidazoliniques.

31. Mélange selon la revendication 1 **caractérisé en ce que** le durcisseur comprend un mélange d'amines cycloaliphatiques et d'amidoamines.
